(19) Europäisches Patentamt
European Patent Office
Office européen des brevets

(11) **EP 2 897 112 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(51) Int Cl.:
*G08B 13/196* (2006.01)     *G07F 19/00* (2006.01)
*G08B 29/18* (2006.01)     *H04N 7/18* (2006.01)

(21) Anmeldenummer: **14151578.3**

(22) Anmeldetag: **17.01.2014**

(54) **Verfahren und Vorrichtung zur Vermeidung von Fehlalarmen bei Überwachungssystemen**

Method and apparatus for the prevention of false alarms in monitoring systems

Procédé et dispositif de prévention des fausses alertes dans les systèmes de surveillance

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.07.2015 Patentblatt 2015/30**

(73) Patentinhaber: **Wincor Nixdorf International GmbH
33106 Paderborn (DE)**

(72) Erfinder:
• **Priesterjahn, Steffen
33100 Paderborn (DE)**
• **Drichel, Alexander
33613 Bielefeld (DE)**

(56) Entgegenhaltungen:
**US-A1- 2013 215 266**

• **MEGHERBI, RASTOGI: "A NOVEL FACE RECOGNITION SYSTEM USING THE BINARY PHASE-ONLY FILTER VIA OPTIMAL CORRELATION THRESHOLDING", SPIE, PO BOX 10 BELLINGHAM WA 98227-0010 USA, Bd. 5909, 16. September 2005 (2005-09-16), - 16. September 2005 (2005-09-16), Seiten 1-11, XP040208527, San Diego USA DOI: 10.1117/12.624467**
• **ANDREY KRYLOV ET AL: "Fast super-resolution from video data using optical flow estimation", SIGNAL PROCESSING, 2008. ICSP 2008. 9TH INTERNATIONAL CONFERENCE ON, IEEE, PISCATAWAY, NJ, USA, 26. Oktober 2008 (2008-10-26), Seiten 853-856, XP031369183, ISBN: 978-1-4244-2178-7**

EP 2 897 112 B1

**Beschreibung**

Die Erfindung betrifft ein Selbstbedienungsterminal (SB) mit Kamera zum Erkennen von Manipulationsversuchen und zur Vermeidung von Fehlalarmen. Insbesondere betrifft die Erfindung ein Selbstbedienungsterminal, das als Geldautomat (ATM) ausgestaltet ist.

Im Bereich von Selbstbedienungsautomaten, insbesondere Geldautomaten, werden häufig kriminelle Handlungen in Form von Manipulationen vorgenommen, die das Ziel verfolgen, sensitive Daten, insbesondere PINs (Personal Identification Numbers) und/oder Kartennummern von Nutzern des Selbstbedienungsterminals auszuspähen. Insbesondere sind Manipulationsversuche bekannt, bei denen sogenannte Skimming-Vorrichtungen, wie beispielsweise Tastaturüberbauten und dergleichen, im Bedienbereich bzw. Bedienfeld widerrechtlich installiert werden. Solche Tastaturüberbauten verfügen häufig über eine eigene Stromversorgung, sowie einen Prozessor, einen Speicher und ein Betriebsprogramm, sodass ein ahnungsloser Nutzer bei Eingabe seiner PIN oder beim Einführen seiner Bankkarte ausgespäht wird. Die ausgespähten Daten werden dann über einen in dem Tastaturüberbau integrierten Sender an einen entfernten Empfänger übertragen, oder werden in einem im Tastaturüberbau befindlichen Datenspeicher gespeichert. Viele der heutzutage anzutreffenden Skimming-Vorrichtungen können nur sehr schwer mit dem menschlichen Auge von originalen Bedienelementen (Tastatur, Kartenleser usw.) unterschieden werden.

Um derartige Manipulationsversuche zu vereiteln, werden häufig Überwachungssysteme eingesetzt, die eine oder mehrere Kameras aufweisen, welche im Bereich des Standortes des Selbstbedienungsterminals montiert sind und das gesamte Bedienfeld und häufig auch den Aufenthaltsbereich des Nutzers erfassen. Eine solche Lösung ist beispielsweise in der DE 201 02 477 U1 beschrieben. Mittels der dortigen Kamera-Überwachung kann sowohl das Bedienfeld selbst, wie auch der davor liegende Aufenthaltsbereich des Nutzers erfasst werden. Um zu unterscheiden, ob eine Person sich im Aufenthaltsbereich befindet, ist noch ein Sensor vorgesehen.

In der GB 2 351 585 A1 wird ein als Geldautomat ausgebildetes Selbstbedienungsterminal mit einer Kamera beschrieben, die oberhalb des Bildschirms montiert ist und zumindest einen Teil des Bedienfeldes erfasst. Die Kamera ist so ausgerichtet, dass sie die Tastatur des Geldautomaten erfasst. Demnach ist ein Selbstbedienungsterminal mit einem Bedienfeld und darin angeordneten Bedienelementen bekannt, bei dem eine Kamera zum Erkennen von Manipulationsversuchen in einem das Bedienfeld umgebenden Gehäuseabschnitts des Selbstbedienungsterminals montiert ist.

Aus der WO 2007 / 093977 A1 ist ein Selbstbedienungsterminal mit einer Kamera-Anordnung bekannt, die mit mehreren Kameras zur Überwachung des Selbstbedienungsterminals ausgestattet ist. Zum Erkennen von Manipulationsversuchen an dem Selbstbedienungsterminal, das z.B. einen Geldautomaten darstellt, sind mehrere Kameras im Nahbereich des Bedienfeldes des Geldautomaten montiert. Eine Kamera erfasst z.B. den Kartenschlitz und eine andere Kamera den Geldausgabeschacht. Eine weitere Kamera ist auf den Benutzer des Geldautomaten ausgerichtet.

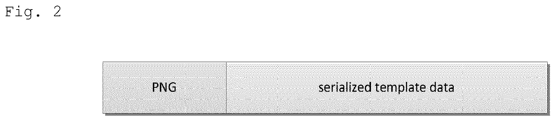

Die DE 203 18 489 U1 beschreibt einen Geldautomaten mit einer Überwachungseinrichtung, die zwei Kameras (Bildaufnahme-Elemente 21 und 22 in Fig. 2) aufweist. Die eine Kamera ist auf den Benutzer ausgerichtet; die andere Kamera ist auf den Bereich der Geldausgabeöffnung bzw. das Geldausgabefach ausgerichtet.

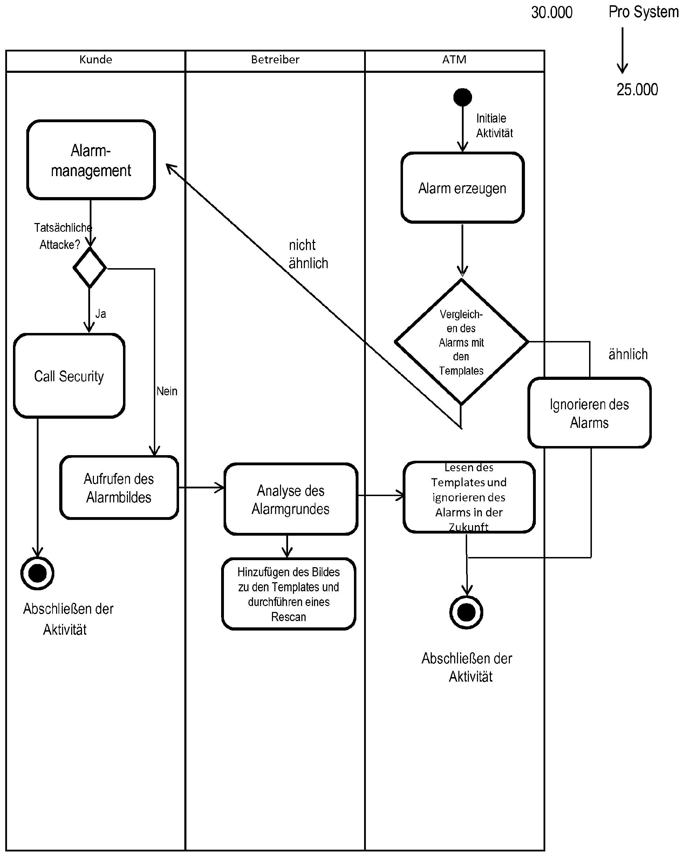

In der WO 2005 / 109315 A1 wird ein Geldautomat mit Sicherheitssystem beschrieben, das eine Kamera aufweist, welche außerhalb des Geldautomaten montiert und den Bedienbereich (ATM interface 22 in Fig. 1) des Geldautomaten erfasst.

Alarmsysteme, die optisch arbeiten, sind weiterhin aus den DE 10 2008 012 231.9, DE 10 2008 039 689.3 DE 10 2008 039 688.5 DE 10 2009 018 322.1, DE 10 2009 018 319.1, DE 10 2009 018 320.5, DE 10 2010 036 350.2, DE 10 2010 036 961.6, DE 10 2010 060 624.3, DE 10 2011 001 541.8 bekannt.

Problematisch sind jedoch Fehlalarme, die durch die Schutzmechanismen hervorgerufen werden.

US 2013/215266 A1 offenbart ein Verfahren zur Erkennung von Ereignissen innerhalb von Video-Daten.

MEGHERBI, RASTOGI: "A NOVEL FACE RECOGNITION SYSTEM USING THE BINARY PHASE-ONLY FILTER VIA OPTIMAL GORRELATION THRESHOLDING", SPIE, PO BOX 10 BELLINGHAM WA 98227-0010 USA, Bd. 5909, 16. September 2005 (2005-09-16),- 16. September 2005 (2005-09-16), Seiten 1-11 , XP040208527, San Diego USA DOI: 10.1117/12.624467 beschreibt ein Verfahren zur Gesichtserkennung

ANDREY KRYLOV ET AL: "Fast super-resolution from video data using optical flow estimation", SIGNAL PROCESSING, 2008. ICSP 2008. 9TH INTERNATIONAL CONFERENCE ON, IEEE, PISCATAWAY, NJ, USA, 26. Oktober 2008 (2008-1 0-26), Seiten 853-856, XP031369183, ISBN: 978-1-4244-2178-7 offenbart ein Verfahren zur bestimmung eines hoch auflösenden Bildes zur biometrischen Nutzung.

Überblick über die Erfindung

Die Aufgabe der Erfindung ist die Verringerung der Wahrscheinlichkeit von Fehlalarmen bei der automatischen Überwachung von sicherheitskritischen Geräten.

Gelöst wird die Aufgabe durch eine Vorrichtung und ein Verfahren nach den Ansprüchen, insbesondere den Hauptansprüchen.

Die Erfindung ermöglicht es dem Betreiber lokal auf bestimmte Gegebenheiten zu reagieren und Fehlalarmursachen auf einzelnen Geräten auszuschalten.

Die Methode arbeitet mit sogenannten Templates, welche von einem Fehlalarm abgeleitet werden. Diese beinhalten alle Informationen über den gemeldeten Alarm und können vom Betreiber manuell in einer Datenbank abgelegt werden. Das Überwachungssystem schließt dann die in den Templates gezeigten Bedingungen als Alarmursache aus. Im Gegensatz zu vielen anderen Verfahren, ermöglichen die Templates dem Betreiber ohne genaue Kenntnisse über den Erkennungsvorgang der Alarme Fehlalarme zu vermeiden.

Die Templates selbst sollten für den Betreiber eine Darstellung haben, die leicht verständlich ist. Im Falle von der Video- oder Bildüberwachung wären das z.B. Bilder, die den Alarmzustand wiedergeben.

Neben einem Verfahren handelt es sich auch um einen SB-Automat, insbesondere einen Geldautomaten, ATM, der mindestens eine Kamera, eine Alarmeinheit, die Alarme erzeugt, wenn der SB-Automat angegriffen wird, einen Netzwerkanschluss zu einem Netzwerk, um die Alarme an einen Kunden weiterzuleiten, umfasst. Das Netzwerk kann entweder eine private Telefonverbindung sein, über die Daten ausgetauscht werden, oder ein internes Netzwerk, oder ein Netzwerk, das eine Verschlüsselung innerhalb eines öffentlichen Netzwerkes erlaubt. Unterschiedliche Netzwerkschnittstellen sind dabei zu berücksichtigen, wie Ethernet, oder dezidierte Punkt zu Punkt analog oder digital Telefonanschlüsse. Weiterhin umfasst der SB Automat mindestens eine Kamera, die in der Regel auf die Bedieneinheiten des SB Automaten gerichtet sind. Diese BedienEinheiten können Kartenlesegeräte, mit den entsprechenden Einschüben, oder Tastaturen oder berührungsempfindliche Bildschirme sein. In der Regel weist ein SB Automat mehrere Kameras auf, so kann eine Kamera auf den Benutzer gerichtet sein, eine weitere Kamera kann auf die Tastatur gerichtet sein, bzw. die Eingabeeinheiten, und eine 3. Kamera kann auf den Einschub des Kartenlesegerätes ausgerichtet werden. Eine Alarmeinheit ist vorgesehen, um auf der Basis von Verhaltensmustern oder bestimmten Bildinformationen von diesen Kameras einen Alarm zu erzeugen. Sollte zum Beispiel eine Oberflächen-Veränderung erkannt worden sein, aus der ein Hinweis auf einen illegalen Aufsatz für ein Kartenlesegerät oder einen Aufsatz für die Tastatur entnommen werden kann, wird ein Alarm erzeugt. Ebenfalls können bestimmte Verhaltensmuster zu Alarmen führen, die bildlich dargestellt werden können. Aufgrund von unterschiedlichen Lichtverhältnissen und Reflexionen in unterschiedlichen Umfeldern kann es jedoch zu Fehlalarmen kommen, die gerätespezifisch sein können und vom Aufstellungsort abhängen. Um solche Fehlalarme individuell für jeden Automat verwalten zu können ist bei der Erfindung ferner eine Einrichtung zur Vermeidung von Fehlalarmen vorgesehen, die ausgebildet ist, um die im Falle eines Alarms erzeugten Alarmbilder der Kamera, aus denen der Alarm abgeleitet wurde, mit Templates zu vergleichen, die auf dem SB-Automaten gespeichert sind, und die einen Fehlalarm kennzeichnen, und falls eine Übereinstimmung mit den Templates feststellbar ist, den Alarm zu ignorieren; ansonsten wird der Alarm über den Netzwerkanschluss und das Netzwerk an einen Kunden weitergeleitet. Die Einrichtung zur Vermeidung eines Fehlalarms ist vorzugsweise eine Kombination von Software und Hardware, die auf dem Betriebssystem des SB Automaten aufgesetzt ist. Sie arbeitet mit den weiteren Komponenten des SB Automaten zusammen und ist in den Steuerungsablauf eingebunden. Der SB Automat kann dabei vorzugsweise auf einem herkömmlichen PC basieren, und wird mit einem Betriebssystem, wie Windows oder Linux bzw. Unix, betrieben. In einem solchen Falle ist die Einrichtung bzw. Vorrichtung zur Vermeidung von Fehlalarmen als ein Softwaremodul aufgebaut, dass in der Vorrichtung integriert ist. Die Einrichtung zur Vermeidung eines Fehlalarms fängt den Alarm des Alarmmoduls ab und überprüft die Bilder, die das Alarmmodul erzeugt hat, mit den Templates, die einen Fehlalarm repräsentieren. Es erfolgt somit ein Bildvergleich, bei dem sowohl ein Bild als auch eine Reihe von Bildern, als auch ganzen Videos miteinander verglichen werden können. Auch ist es denkbar, dass mehrere Bilder von unterschiedlichen Kameras in einem Template abgelegt werden. Sollte keine Übereinstimmung festgestellt worden sein, so wird der Alarm über das Netzwerk an den Betreiber des Automaten bzw. eine entsprechende Servicestelle weitergeleitet.

Sollte die Servicestelle bzw. der Betreiber nun feststellen, dass der gemeldete Alarm ein Fehlalarm ist, so kann über eine Schnittstelle zum SB-Automaten eine neue Konfiguration des Automaten vorgenommen werden, indem die Alarmbilder, die erzeugt wurden, nun zu Templates umgewandelt werden. Hierbei wird ebenfalls eine Verbindung zum SB Automaten über das Netzwerk aufgebaut.

In einer möglichen Ausführungsform ist die Einrichtung zur Vermeidung von Fehlalarmen zu Konfiguration ausgebildet, um nach der Anweisung durch den Betreiber (remote instruction) die Erzeugung eines Templates auf dem SB-Automaten vorzunehmen, wenn der Kunde/Betreiber der Auffassung ist, es handelt sich um einen Fehlalarm, der in der Zukunft ignoriert werden soll, um dann die Alarmbilder auf dem SB-Automaten zu Templates zu konvertieren, um einen ähnlichen oder gleichen Alarm in der Zukunft zu vermeiden.

In einer bevorzugten Ausführungsform arbeitet die Einrichtung zur Vermeidung von Fehlalarmen beim Vergleichen der digitalen Alarmbilder mit Templates, ausgebildet mit einem oder mehreren der folgenden Verfahren: eine Kreuzkorrelation,CC, eine normalisierte Kreuzkorrelation, NCC, normalisierte euklidische Distanz, SED, normalisierte quadrierte euklidische Abstand ,NSE.

In einer weiteren Ausführungsform ist die Einrichtung zur Vermeidung von Fehlalarmen ausgebildet, um beim NSED ein Unschärfen der Bilder zu verwenden, indem ein Filter, vorzugsweise ein Gauß-Filter, einsetzbar ist. Andere Algorithmen, die eine gewisse Unschärfe erzeugen, sind ebenfalls denkbar.

In einer weiteren vorzugsweisen Ausgestaltung besteht das Template aus Bilddaten und Metadaten, wobei die Meta-Daten eine oder mehrere der folgenden Informationen umfassen:

a) Informationen von den vorverarbeiteten Bildern

- Blende
- Merkmale, die aus den Bildern errechnet werden b) Kamera-Informationen
- Seriennummer
- Kalibrierung auf den Bereich, der von Interesse ist, - - - Kamera Messungen

C) System-Informationen des SB-Automaten

- Typ
- Modell-Beschreibung, wie Seriennummer.

Die Merkmale, die aus den Bildern errechnet werden, sind z.B. statistische Merkmale (Helligkeit, Kontrast), Bildähnlichkeit, konturbasiert, segmentbasier Merkmale oder andere Merkmale, Kantenbild, Farbbild und weitere vorverarbeitete Bilder. Hierfür können unterschiedliche Verfahren verwendet werden, z.B. euklidischer Abstand, Kreuzkorrelation, usw..

In einer bevorzugten Ausführungsform erfolgt die Ablage von META Daten und Bilddaten in einer Datei, die ein Template definiert. Ferner gibt es unterschiedliche Arten von Templates, einerseits automatisch erzeugte Templates, die bei der Konfiguration der Kamera oder des SB Automaten erzeugt wurden, und dazu dienen um die Kameraeinstellungen vorzunehmen und um Vergleichsparameter für die weiteren Bilder bereitzustellen. Durch diese Referenz-Templates kann auch erkannt werden, ob manipulierte Templates untergeschoben wurden, bzw. ob Komponenten, wie Kameras, des SB Automaten ausgetauscht wurden. Falls dies erkannt werden sollte, kann entweder ein Alarm erzeugt werden, oder es werden entsprechende Funktionen eingeschränkt, die zum vermehrten Abfangen von Alarmen führen würden.

Die Einrichtung zur Vermeidung von Fehlalarmen kann so ausgebildet werden, dass META-Daten ebenfalls in den Vergleich einfließen. So können zum Beispiel die Seriennummern der Templates mit der Seriennummer des aktuellen Alarmbildes, falls dieses ebenfalls Metadaten aufweist, oder mit anderen Metadaten, die bei den automatischen Templates jetzt erzeugt wurden, verglichen werden. Somit kann sichergestellt werden, dass die Kamera identisch ist. Weiterhin können Einstellungsparameter der Kamera miteinander verglichen werden, wie der Bildbereich und die Blende. Auch können Informationen des SB Automaten selber in den Metadaten der Templates abgelegt werden, um diese dann abzufragen, um sicherzustellen, dass Templates von anderen SB-Automaten nicht fälschlicherweise dem SB-Automaten untergeschoben wurden.

Figurenbeschreibung:

Figur 1 zeigt den Ablauf des Verfahrens

Figur 2 zeigt den Aufbau eines Templates

Beschreibung der Erfindung:

Eine Basisoperation liegt darin, die entsprechenden Template-Dateien von dem Manipulation Verzeichnis in das Template-Verzeichnis zu kopieren und ein Template-Rescan über den Befehl "os_ctrl.exe" anzustoßen. Hierdurch werden die Informationen der Fehlalarme als Templates abgelegt. Um die Bedienung zu verbessern wird dem Benutzer eine zusätzliche Option auf der Benutzeroberfläche bereitgestellt, die lautet "Add to templates". Ferner gibt es in der Benutzeroberfläche einen Bereich, der es einem Benutzer erlaubt, die Templates/Vorlagen zu verwalten.

Template-dateien enthalten einen Manipulationsbericht, der zu den System-Templates hinzugefügt werden kann. Jede Manipulation, die vom System erkannt wird, erzeugt automatisch eine vorbereitende Template- Datei, die später zu den aktiven Templates hinzugenommen werden muss. Diese Template-Datei wird vorzugsweise in ein besonderes Verzeichnis gespeichert..

Die Dateien, die durch ein Modul oder eine Bibliothek/Library verwaltet werden, sollten transparent für den Benutzer verwaltbar und erkennbar sein. In einem möglichen Falle sind es Bilder, die durch eine Bildbetrachtung oder Videobetrachtung zu erkennen sind.

Das Format des Template Files sollte auf BMP, PNG oder JPEG basieren und enthält die folgenden zusätzlichen Informationen in seinen Metadaten

- Kamerainformation (insbesondere Seriennummern)
- Kamerakalibrierung Informationen (Bildausschnitt, Auflösung, Blende, Belichtungszeit, Automatikeinstellungen, Weiß abgleich)
- Erzeugungsdatum aller vorverarbeiteten Bilder, die als Eingabe für die Manipulations-Erkennung benutzt wurden
- Manipulations-Historie-Informationen
- vorzugsweise keine Portrait-Bilder, ausgenommen davon ist, dass die Manipulation durch eine Portrait-Kamera bekannt wurde.

Auf der Basis dieser Kamerainformationen und der Kamerakalibrierungsinformationen können Templates ignoriert werden, wenn die Kamera mit anderen Parametern läuft als zur Aufnahme der Templates.

Durch die vorverarbeiten Bilder wird die Belichtung korrigiert, das Rauschen entfernt, Schatten erkannt, usw.

Die Manipulationshistorie gibt einen Überblick über die bisher erkannten Manipulationen. Hier findet man auch die Fehlalarme, die nun vermieden werden sollen.

Auf der Basis dieser Templates, wird kein Alarm ausgelöst, wenn ein solch ähnliches Template existiert, obwohl dies ohne Template der Fall wäre.

Bei der Konfiguration eines Systems kann der Techniker des Gerätes einen Modus aktivieren, indem alle erkannten Manipulationen in dem Template-Folder für einen bestimmten Zeitpunkt abgelegt werden. Hierdurch kann ein Arbeiten am Gerät sichergestellt werden und es können Konfigurationen auf der Basis dieser Templates durchgeführt werden. Durch die so gesammelten Manipulationen kann der Techniker durch die Verwendung eines spezifischen Programmes, wie z.B. "os_ctrl.exe" in einen automatischen Template-Modus umschalten, wie auch zum Beispiel für eine Kamerakalibrierung anzuwenden ist. Diese automatische Template-Erzeugung dient dazu, das Gerät anzulernen, oder um eine neue Kamera zu integrieren. Basierend auf diesen Templates, werden Abweichungen in der Zukunft erkannt, zum Beispiel wenn die Kamera ausgetauscht wurde durch eine Person die dazu nicht berechtigt war. Im Autogeneriermodus werden Alarme gesammelt und direkt als Template gespeichert Durch einen nicht berechtigten Austausch der Kamera wird dann anhand der alten Templates erkannt, dass bestimmte Seriennummern oder andere Kalibrierungsinformationen nicht mehr übereinstimmen, so dass auch hierdurch ein Alarm entstehen kann. Ein Techniker hingegen, der berechtigt ist, die Kammera auszutauschen, muss daher eine Reihe von Referenz Templates erzeugen. In einer bevorzugten Ausführungsform werden diese automatisch erzeugten Templates auch entsprechend gekennzeichnet, so dass vermieden wird, dass diese Templates keinen Alarm auslösen. Vielmehr sollen diese Templates dazu dienen, die Metadaten für die Kamera bereitzustellen, um eine Manipulation einer Kamera erkenntlich zu machen.

In einer weiteren Ausführungsform können auch die automatisch erzeugten Templates bei einem legalen Kameraaustausch gelöscht werden, um diese später erneut zu erzeugen. Auch hierfür kann ein spezielles Kommando verwendet werden. Diese automatisch erzeugten Templates können gelöscht werden, wenn die Kalibrierungsinformationen nicht mehr aktuell sind oder die Seriennummer nicht mehr mit der aktuellen Kamera übereinstimmt.

In einem ATM können eine Vielzahl von Kameras angeordnet sein. Solche Kameras sind Portrait, Fascia/Bedienfeld oder Kartenlese-Kameras. Die Portrait-Kamera nimmt Live-Bilder auf und passt ihre Belichtungszeit an die aktuellen Lichtbedingungen an. Dadurch ergibt es sich, dass diese unterschiedlich zu behandeln sein kann.

Der ATM verwaltet eine sogenannte Template-Datenbank. Diese Datenbank besteht aus Templates mit Bildern, die z.B. in einem Verzeichnis abgelegt sind, um Situationen zu identifizieren, bei denen kein Alarm weitergeleitet werden soll, obwohl dieser von anderen Komponenten erkannt wurde. Anhand der darin enthaltenen Bildern wird ein Vergleich mit den Bildern vorgenommen, die einem Alarm zugeordnet sind, und wenn eine hohe Übereinstimmung gegeben ist, dann wird der Alarm nicht an den Betreiber des ATM weitergeleitet.

Daraus ergibt sich, dass eine Bild-Ähnlichkeits-Analyse benötigt wird, um eine Ähnlichkeit zwischen einem Template und einem aktuellen Bild, das im Zusammenhang mit dem Alarm steht, zu bestimmen. Mögliche Berechnungsverfahren werden im folgenden beschrieben sind jedoch nicht ausschließlich relevant.

Hierzu wird eine Kreuzkorrelation berechnet. Es sind 2 Bilder A, B, mit m x n und c Kanälen gegeben. Die Kreuzkorrelation (CC) wird wie folgt berechnet.

$$CC(A,B) = \sum_{k=1}^{c} \sum_{i=1}^{m} \sum_{j=1}^{n} (A[i,j] \, B[i,j]).$$

Die CC eines Bildes mit sich selbst wird auch Autokorrelation genannt. Die normalisierte Kreuzkorrelation NCC wird wie folgt berechnet

$$NCC(A,B) = \frac{CC(A,B)}{\sqrt{CC(A,A) \; CC(B,B)}}.$$

Die NCC ist immer ein Wert zwischen Null und Eins. Er ist gleich eins, wenn beide Bilder gleich sind. Die NCC zwischen einem komplett weißen und einem komplett schwarzen Bild ist Null. Der Normalisierungsschritt macht die Messung robuster gegen globale Beleuchtungsänderungen. Allerdings reagiert die Berechnung sehr empfindlich auf lokale Beleuchtungs-Veränderungen, z.B. Schatten.

Bei der normalisierte euklidische Distanz mit zwei $m \times n$ Bildern $A$ und $B$ mit $C$ Kanälen wird die quadratische euklidische Distanz (SED) berechnet durch

$$SED(A,B) = \sum_{k=1}^{c} \sum_{i=1}^{m} \sum_{j=1}^{n} (A[i,j] - B[i,j])^2.$$

Ein niedriger euklidischer Abstand steht für eine große Ähnlichkeit zwischen den beiden Bildern. Wenn beide Bilder gleich sind, ist der euklidische Abstand Null.

Der normalisierte quadrierte euklidische Abstand (NSED) wird wie folgt berechnet.

$$NSED(A,B) = \frac{SED(A,B)}{\sqrt{CC(A,A) \ CC(B,B)}}$$

Wie beim NCC ist der NSED haben unterschiedliche Vor- und Nachteile, die je nach Einsatzsituation zu berücksichtigen sind, um die Verfahren alleine oder kombiniert zu nutzen.

Ein Template/Vorlage wird als eine spezielle Bild-Datei im Fall eines Alarms oder einer Kamera Kalibrierung erzeugt. Diese Datei enthält z.B. eine oder mehrere der folgenden Informationen oder auch der anderen Informationen die oben benannt wurden.

- Alle verfügbaren vorverarbeiteten Bilder

    o Blende
    o Kantenbild, Farbbild und weitere vorverarbeitete Bilder

- Kamera Informationen

    o Seriennummer

    o Kalibrierung auf den Bereich, der von Interesse ist,

- System-Informationen,
  wie Seriennummer, Modell, und Konfigurationsstand

Die Template-Datei selbst besteht aus einem PNG [10] Bild und den oben genannten Daten z.B. in einem seriellen Format. Ein Beispiel kann man Figur 2 entnehmen.

Das PNG zeigt das Manipulations-Bild, das während des Manipulationsereignisses aufgenommen wurde, oder das Ausschnittbild der Kalibrierung. Für das Betriebssystem des ATM sieht diese Datei wie eine Standard- PNG -Datei aus, so dass eine Vorschau mit einem Standard-Bild-Betrachtungssystem erfolgen kann. Die tatsächlichen Template-Daten werden durch Serialisierung der oben genannten Informationen und dem Anhängen an die PNG-Daten generiert. Die serialisierten Daten können dann komprimiert werden, um die Dateigröße zu reduzieren. Durch Abgrenzung mit Hilfe des Tags <template_data> werden die PNG Inhalte von einander getrennt.

Die Template-Datenbankinstanz wird auf einen bestimmten Ordner konfiguriert, dessen Inhalt dann gescannt und in den Speicher durch die Funktion rescan() geladen wird. Abhängig von der der Ähnlichkeit kann auch nur ein Teil der Template- Bilder im Speicher gehalten werden. Template-Dateien, deren Kamera Informationen oder Kalibrierung-Informationen nicht zu den aktuellen Kamera- Daten passen, werden ignoriert.

In einer bevorzugten Ausführungsform wird eine API bereitgestellt, die eine Klasse für die Datenbank umfasst und eine Klasse für die Templates. Datenbankklasse wiederum verwaltet die Instanzen der Template-Klasse. Die Template-Klasse ermöglicht den Zugriff auf die Meta-Daten und die Bilddaten, wie sie oben beschrieben wurden. Weiterhin kann in der Template-Klasse auch die Ähnlichkeit berechnet werden.

Für den Betrieb des ATMs gibt es einen ersten Schritt, in dem die Templates automatisch erzeugt werden.

Die Vorlagen werden automatisch generiert, wenn

- eine Kamera erfolgreich kalibriert wurde, oder
- eine Manipulation erkannt wurde, während der ATM im Vorlage-Erzeugungs-Modus arbeitet.

Automatisch generierte Templates weisen bestimmte Dateinamen auf, so dass eine Erkennung ermöglicht wird. Die Kalibrierungs-Templates beginnen z.B. mit dem Präfix calib, während Auto - Vorlagen mit dem Präfix auto beginnen. Auch kann die Kamera, von der das Bild aufgenommen wurde, mit in den Namen der Datei einfließen. Wenn z.B. CR verwendet wird, handelt es sich um die Kamera beim Karten-Lesegerät (Card Reader) oder fascia steht für die Kamera, die die Eingabeeinheiten wie Tastatur oder Bildschirm (auch Touchscreen) überwacht. Der restliche Dateiname kann durch das Datum und die Uhrzeit, zu der die Datei generiert wurde, bestimmt werden. Ein optionaler Index kann verwendet werden, um Datei-Doppelnamen zu vermeiden.

Beim Vergleichen der Templates werden die Alarm-Bilder mit den Templates mit Hilfe eines der oben beschriebenen Verfahren verglichen. Die Auswahl des Verfahrens wird von der Umgebung des ATM abhängen.

Die eine mögliche Nutzung könnte der (nicht normierte) quadrierte euklidische Abstand (SED) in Kombination mit der Gauß-Filterung sein oder die Kreuzkorrelation (CC) mit einem gemischtes"blended" Bild sein. Ein "blended"-Bild ist ein Bild, das durch Zusammenrechnung mehrerer Einzelbilder entstanden ist. Z.B. wie bei HDR-Fotographie. Der Grund dafür ist, dass eine Vorlage eigentlich nur unter ähnlichen Lichtverhältnissen angepasst werden sollte. Die normierten Methoden neigen dazu, bestimmte globale Änderungen in der Beleuchtung zu ignorieren.

Das Template-Matching wird vorzugsweise auf den ganzen Bildern berechnet.

Die Template-Datenbank weist verschiedene Optionen auf. So können unterschiedliche Vergleichsverfahren vorgegeben werden. Es kann bestimmt werden, ob eine Unschärfe angewendet werden soll, und der Schwellenwert für den Vergleich mit den Vergleichsverfahren kann bestimmt werden.

HTTP    Hypertext Transfer Protocol
JPEG    Joint Picture Expert Group (usually used as a name for the respective image file format)
ONVIF   Open Network Video Interface Forum

OSG       Optical Security Guard
OSI        Optical Security Interface
PNG      Portable Network Graphics (an image file format)
SIT         System Integration Test
SOAP     XML-based network message protocol, originally "Simple Object Access Protocol"
SOP      Service Operator Panel
STL        Standard Template Library (part of the C++ Standard)
T/SOP    Technician SOP
WNMV   wincor Nixdorf Machine Vision (A library that forms the basis of OSG)

## Patentansprüche

1. Verfahren zur Vermeidung von Fehlalarmen auf einem Selbstbedienungsterminal, SB, wobei der SB-Automat mindestens eine Kamera aufweist und mindestens eine Alarmeinheit, die Alarme erzeugt, wenn der SB-Automat angegriffen wird, und einen Netzwerkanschluss zu einem Netzwerk aufweist, um die Alarme an einen Kunden weiterzuleiten, umfassend die Schritte:

   - Erzeugen eines Alarms, durch die Alarmeinheit, und Speichern von Alarmbildern der Kamera, aus denen der Alarm abgeleitet wurde;
   - Vor dem Weiterleiten des Alarms über ein digitales Netzwerk an einen Betreiber, Vergleichen der digitalen Alarmbilder mit Templates oder Vorlagen die auf dem SB-Automaten gespeichert sind, und die einen Fehlalarm kennzeichnen, und falls eine Übereinstimmung mit den Templates festgestellt wird, wird der Alarm ignoriert; ansonsten wird der Alarm über das Netzwerk an den Kunden weitergeleitet,

   wobei nach dem Empfang des Alarms über das Netzwerk und nach Analyse des Alarms über das Netzwerk die Erzeugung eines Templates auf dem SB-Automaten angestoßen wird, wenn der Kunde der Auffassung ist, es handelt sich um einen Fehlalarm, der in der Zukunft ignoriert werden soll, wobei dann die Alarmbilder auf dem SB-Automaten zu Templates konvertiert werden, um einen ähnlichen Alarm in der Zukunft zu vermeiden.

2. Das Verfahren nach einem oder mehreren der vorhergehenden Ansprüche, wobei das Vergleichen der digitalen Alarmbilder mit Templates durch ein oder mehrere der folgenden Verfahren erfolgt:

   eine Kreuzkorrelation,CC,
   eine normalisierte Kreuzkorrelation, NCC,
   normalisierte euklidische Distanz, SED, normalisierte quadrierte euklidische Abstand ,NSED,

3. Das Verfahren nach dem vorhergehenden Anspruch, wobei beim NSED ein Unschärfen der Bilder verwendet wird, indem ein Filter, oder ein Gauß-Filter, verwendet wird.

4. Das Verfahren nach einem oder mehreren der vorhergehenden Ansprüche, wobei das Template aus Bilddaten und Metadaten besteht, wobei die Meta-Daten eine oder mehrere der folgenden Informationen umfassen:

   a) Informationen von den vorverarbeiteten Bildern

   - Blende

   b) Kamera-Informationen

   - Seriennummer
   - Kalibrierung auf den Bereich, der von Interesse ist, - -
   - Kamera Messungen

   C) System-Informationen des SB-Automaten

   - Seriennummer
   - Model Beschreibung

   wobei die Ablage von META Daten und Bilddaten in einer Datei erfolgen kann und ein Template definiert und wobei die META-Daten ebenfalls in den Vergleich einfließen können.

5. Das Verfahren nach einem oder mehreren der vorhergehenden Ansprüche, wobei die Templates mehrere Bilder oder Bildreihen, oder Videos, umfassen, die mit Alarmbildreihen verglichen werden.

6. Das Verfahren nach dem vorhergehenden Anspruch, wobei die Templates mit mehreren Bildern Bilder aus unterschiedlichen Kameras verwalten.

7. Das Verfahren nach einem oder mehreren der vorhergehenden Ansprüche, wobei der SB-Automat in einen automatischen Template-Modus geschaltet wird, zur Kalibrierung der Kamera und zur Ablage der META-Daten für die Kamera.

8. SB-Automat,
   umfassend eine Kamera, eine Alarmeinheit, die Alarme erzeugt, wenn der SB-Automat angegriffen wird, einen Netzwerkanschluss zu einem Netzwerk, um die Alarme an einen Kunden weiterzuleiten, mit einer Einrichtung zur Vermeidung von Fehlalarmen, die ausgebildet ist, um die im Falle eines Alarms erzeugten Alarmbildern der Kamera, aus denen der Alarm abgeleitet wurde, mit Templates zu vergleichen, die auf dem SB-Automaten gespeichert sind, und die einen Fehlalarm kennzeichnen, und falls eine Übereinstimmung mit den Templates feststellbar ist, den Alarm zu ignorieren; ansonsten den Alarm über den Netzwerkanschluss und das Netzwerk an einen Kunden weiterzuleiten,
wobei die Einrichtung zur Vermeidung von Fehlalarmen ausgebildet ist, um auf Anweisung nach dem Empfang des Alarms über das Netzwerk und nach Analyse des Alarms über das Netzwerk die Erzeugung eines Templates auf dem SB-Automaten vorzunehmen, wenn der Kunde der Auffassung ist, es handelt sich um einen Fehlalarm, der in der Zukunft ignoriert werden soll, um dann die Alarmbilder auf dem SB-Automaten zu Templates zu konvertieren, um einen ähnlichen Alarm in der Zukunft zu vermeiden.

9. SB-Automat nach einem oder mehreren der vorhergehenden SB-Automaten-Ansprüche, wobei die Einrichtung zur Vermeidung von Fehlalarmen zum Vergleichen der digitalen Alarmbilder mit Templates ausgebildet ist, um eines oder mehrere der folgenden Verfahren zu verwenden:

    eine Kreuzkorrelation,CC,
    eine normalisierte Kreuzkorrelation, NCC,
    normalisierte euklidische Distanz, SED, normalisierte quadrierte euklidische Abstand ,NSED,

10. SB-Automat nach dem vorhergehenden SB-Automaten-Anspruch, wobei die Einrichtung zur Vermeidung von Fehlalarmen ausgebildet ist, um beim NSED ein Unschärfen der Bilder zu verwenden, indem ein Filter oder ein Gauß-Filter, einsetzbar ist.

11. SB-Automat nach einem oder mehreren der vorhergehenden
SB-Automaten-Ansprüche, wobei das Template aus Bilddaten und Metadaten besteht, wobei die Meta-Daten eine oder mehrere der folgenden Informationen umfassen:

    a) Informationen von den vorverarbeiteten Bildern

       - Blende

    b) Kamera-Informationen

       - Seriennummer
       -- Kalibrierung auf den Bereich, der von Interesse ist, -
       - - Kamera Messungen

    C) System-Informationen des SB-Automaten

       - Seriennummer
       - Model-Beschreibung

und wobei die Ablage von META Daten und Bilddaten in einer Datei erfolgen kann und ein Template definiert oder wobei die Einrichtung zur Vermeidung von Fehlalarmen ausgebildet ist, um die META-Daten ebenfalls in den Vergleich einfließen zu lassen.

12. SB-Automat nach einem oder mehreren der vorhergehenden SB-Automaten-Ansprüche, wobei die Templates mehrere Bilder oder Bildreihen, oder Videos, umfassen, die mit Alarmbildreihen vergleichbar sind.
und/oder wobei in den Templates mehrere Bildern aus unterschiedlichen Kameras gespeichert sind.

13. SB-Automat nach einem oder mehreren der vorhergehenden SB-Automaten-Ansprüche, wobei der SB-Automat in einen automatischen Template-Modus schaltbar ist, zur Kalibrierung der Kamera und zur Ablage der META-Daten für die Kamera.

**Claims**

1. Method for avoiding false alarms on a self-service terminal,
wherein the self-service terminal has at least one camera and at least one alarm unit that generates alarms when the self-service terminal is attacked, and has a network connection to a network for forwarding the alarms to a client, comprising the steps:

    - generating an alarm by way of the alarm unit, and storing alarm images from the camera, from which images the alarm was derived;
    - before forwarding the alarm via a digital network to an operator, comparing the digital alarm images with templates or patterns stored on the self-service terminal and that identify a false alarm, and, if a match with the templates is established, the alarm is ignored; otherwise, the alarm is forwarded to the client via the network,

wherein, following reception of the alarm via the network and following analysis of the alarm via the network, generation of a template on the self-service terminal is initiated if the client believes that it is a false alarm that should be ignored in future, wherein the alarm images on the self-service terminal are then converted into templates in order to avoid a similar alarm in future.

2. Method according to one or more of the preceding claims, wherein the digital alarm images are compared with templates using one or more of the following methods:

    a cross-correlation, CC,
    a normalized cross-correlation, NCC,

normalized Euclidean distance, SED,
normalized squared Euclidean distance, NSED.

3. Method according to the preceding claim, wherein, in the case of NSED, blurring of the images is used by using a filter or a Gaussian filter.

4. Method according to one or more of the preceding claims, wherein the template consists of image data and metadata, wherein the metadata comprise one or more of the following items of information:

   a) information from the pre-processed images

   - aperture

   b) camera information

   - serial number
   - calibration on the field of interest,
   - camera measurements

   c) system information on the self-service terminal

   - serial number
   - model description

   wherein the metadata and image data may be stored in a file and a template may be defined, and wherein the metadata are also able to be used in the comparison.

5. Method according to one or more of the preceding claims, wherein the templates comprise a plurality of images or series of images or videos that are compared with alarm image sequences.

6. Method according to the preceding claim, wherein the templates use a plurality of images to manage images from different cameras.

7. Method according to one or more of the preceding claims, wherein the self-service terminal is switched into an automatic template mode for calibrating the camera and for storing the metadata for the camera.

8. Self-service terminal,
comprising a camera, an alarm unit that generates alarms when the self-service terminal is attacked, a network connection to a network for forwarding the alarms to a client, with a device for avoiding false alarms that is designed to compare the alarm images, generated in the event of an alarm, from the camera, from which images the alarm was derived, with templates stored on the self-service terminal and that identify a false alarm, and, if it is possible to establish a match with the templates, to ignore the alarm; otherwise, to forward the alarm to a client via the network connection and the network, wherein the device for avoiding false alarms is designed, upon instruction following reception of the alarm via the network and following analysis of the alarm via the network, to generate a template on the self-service terminal if the client believes that it is a false alarm that should be ignored in future, in order then to convert the alarm images on the self-service terminal into templates in order to avoid a similar alarm in future.

9. Self-service terminal according to one or more of the preceding self-service terminal claims, wherein the device for avoiding false alarms is designed to compare the digital alarm images with templates in order to use one or more of the following methods:

   a cross-correlation, CC,
   a normalized cross-correlation, NCC,
   normalized Euclidean distance, SED,
   normalized squared Euclidean distance, NSED.

10. Self-service terminal according to the preceding self-service terminal claim, wherein the device for avoiding false alarms is designed, in the case of NSED, to use blurring of the images by being able to use a filter or a Gaussian filter.

11. Self-service terminal according to one or more of the preceding self-service terminal claims, wherein the template consists of image data and metadata, wherein the metadata comprise one or more of the following items of information:

   a) information from the pre-processed images

   - aperture

   b) camera information

   - serial number
   - calibration on the field of interest,
   - camera measurements

   c) system information on the self-service terminal

   - serial number
   - model description

   and wherein the metadata and image data may be stored in a file and a template may be defined, or wherein the device for avoiding false alarms is designed also to allow the metadata to be used in the comparison.

12. Self-service terminal according to one or more of the preceding self-service terminal claims, wherein the templates comprise a plurality of images or series of images or videos that are able to be compared with alarm image sequences,
and/or wherein a plurality of images from different cameras are stored in the templates.

**13.** Self-service terminal according to one or more of the preceding self-service terminal claims, wherein the self-service terminal is able to be switched into an automatic template mode for calibrating the camera and for storing the metadata for the camera.


**Revendications**

**1.** Procédé pour éviter les fausses alarmes sur un terminal de libre service,
l'automate de libre service comportant au moins une caméra et au moins une unité d'alarme qui génère des alarmes lorsque l'automate de libre service est attaqué, et comportant une connexion à un réseau pour transmettre les alarmes à un client, le procédé comprenant les étapes suivantes :

 - générer une alarme par le biais de l'unité d'alarme et mémoriser des images d'alarme de la caméra à partir de laquelle l'alarme a été déclenchée ;
 - avant de transmettre l'alarme à un opérateur par le biais d'un réseau numérique, comparer les images d'alarme numériques avec des modèles qui sont en mémoire dans l'automate de libre service et qui caractérisent une fausse alarme et, en cas de correspondance avec les modèles, ignorer l'alarme ; sinon transmettre l'alarme au client par le biais du réseau,

après réception de l'alarme par le biais du réseau et après analyse de l'alarme par le biais du réseau, la génération d'un modèle de l'automate de libre service étant déclenchée lorsque le client considère qu'il s'agit d'une fausse alarme qu'il faut ignorer à l'avenir, les images d'alarme de l'automate de libre-service étant converties en modèles pour éviter à l'avenir une alarme similaire.

**2.** Procédé selon au moins une des revendications précédentes, la comparaison des images d'alarme numériques avec des modèles étant effectuée selon au moins un des procédés suivants :

 une corrélation croisée CC,
 une corrélation croisée normalisée NCC,
 une distance euclidienne normalisée SED, une distance euclidienne au carré normalisée NSED.

**3.** Procédé selon la revendication précédente, un flou des images étant utilisé dans la NSED à l'aide d'un filtre ou d'un filtre gaussien.

**4.** Procédé selon l'une au moins des revendications précédentes, le modèle comprenant des données d'image et des métadonnées, les métadonnées comprenant au moins une des informations suivantes :

 a) des informations tirées des images prétraitées

  - ouverture

 b) des informations sur la caméra

  - numéro de série
  - étalonnage sur la zone d'intérêt,
  - mesures de caméra

 c) des informations de système de l'automate de libre service

  - numéro de série
  - description du modèle

les métadonnées et les données d'image pouvant être stockées dans un fichier et un modèle étant défini et les métadonnées pouvant également être incluses dans la comparaison.

**5.** Procédé selon l'une au moins des revendications précédentes, les modèles comprenant plusieurs images ou séries d'images, ou vidéos, qui sont comparées aux séries d'images d'alarme.

**6.** Procédé selon la revendication précédente, les modèles comprenant plusieurs images gérant des images provenant de différentes caméras.

**7.** Procédé selon l'une au moins des revendications précédentes, l'automate de libre service étant commuté dans un mode de modèle automatique pour étalonner la caméra et stocker les métadonnées de la caméra.

**8.** Automate de libre service, comprenant une caméra, une unité d'alarme qui génère des alarmes si l'automate de libre service est attaqué, une connexion à un réseau destinée à transmettre les alarmes à client, un dispositif étant prévu pour éviter de fausses alarmes, lequel est conçu pour comparer les images d'alarme de la caméra, qui ont été générées en cas d'alarme et à partir desquelles l'alarme a été déclenchée, avec des modèles qui sont en mémoire dans l'automate de libre service et qui caractérisent une fausse alarme et pour ignorer l'alarme en cas de correspondance avec les modèle ; sinon pour transmettre l'alarme à un client par le biais de la connexion réseau et le réseau,

le dispositif destiné à éviter des fausses alarmes étant conçu pour générer, sur instruction après réception de l'alarme par le biais du réseau et après analyse de l'alarme par le biais du réseau, un modèle sur l'automate de libre service lorsque le client considère qu'il s'agit d'une fausse alarme, qu'il faut ignorer à l'avenir, pour convertir les images d'alarme de l'automate de libre service en modèles pour éviter à l'avenir une alarme similaire.

9. Automate de libre service selon l'une au moins des revendications d'automate de libre service précédentes, le dispositif destiné à éviter des fausses alarmes étant conçu pour comparer les images d'alarme numériques avec des modèles pour utiliser l'un au moins des procédés suivants :

   une corrélation croisée CC,
   une corrélation croisée normalisée NCC,
   une distance euclidienne normalisée SED,
   une distance euclidienne au carré normalisée NSED.

10. Automate de libre service selon la revendication d'automate de libre service précédente, le dispositif destiné à éviter les fausses alarmes étant conçu pour utiliser un flou des images dans la NSED à l'aide d'un filtre ou d'un filtre gaussien.

11. Automate de libre service selon l'une au moins des revendications d'automate de libre service précédentes, le modèle comprenant des données d'image et des métadonnées, les métadonnées comprenant au moins une des informations suivantes :

   a) des informations tirées des images prétraitées

      - ouverture

   b) des informations sur la caméra

      - numéro de série
      - étalonnage sur la zone d'intérêt,
      - mesures de caméra

   c) des informations de système de l'automate de libre service

      - numéro de série
      - description du modèle

   les métadonnées et les données d'image pouvant être stockées dans un fichier et un modèle étant défini et le dispositif destiné à éviter des fausses alarmes étant conçu de manière à pouvoir également inclure les métadonnées dans la comparaison.

12. Automate de libre service selon l'une au moins des revendications d'automate de libre service précédentes, les modèles comprenant plusieurs images ou séries d'images, ou vidéos, qui peuvent être comparées aux séries d'images d'alarme, et/ou plusieurs images provenant de différentes caméras étant mémorisées dans les modèles.

13. Automate de libre service selon l'une au moins des revendications d'automate de libre service précédentes, l'automate de libre service pouvant être commuté dans un mode de modèle automatique pour étalonner la caméra et stocker les métadonnées de la caméra.

30.000    Pro System

25.000

| Kunde | Betreiber | ATM |
|-------|-----------|-----|

**Initiale Aktivität**

Alarm erzeugen

Alarm-management

Tatsächliche Attacke?

nicht ähnlich

Vergleich-en des Alarms mit den Templates

ähnlich

Ja

Call Security

Nein

Ignorieren des Alarms

Aufrufen des Alarmbildes

Analyse des Alarmgrundes

Lesen des Templates und ignorieren des Alarms in der Zukunft

Abschließen der Aktivität

Hinzufügen des Bildes zu den Templates und durchführen eines Rescan

Abschließen der Aktivität

Fig. 2

| PNG | serialized template data |
|-----|--------------------------|

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20102477 U1
- GB 2351585 A1
- WO 2007093977 A1
- DE 20318489 U1
- WO 2005109315 A1
- DE 102008012231
- DE 102008039689
- DE 102008039688
- DE 102009018322
- DE 102009018319
- DE 102009018320
- DE 102010036350
- DE 102010036961
- DE 102010060624
- DE 102011001541
- US 2013215266 A1

**In der Beschreibung aufgeführte Nicht-Patentliteratur**

- **MEGHERBI, RASTOGI.** A NOVEL FACE RECOGNITION SYSTEM USING THE BINARY PHASE-ONLY FILTER VIA OPTIMAL GORRELATION THRESHOLDING. SPIE, 16. September 2005, vol. 5909, 1-11
- Fast super-resolution from video data using optical flow estimation. **ANDREY KRYLOV et al.** SIGNAL PROCESSING, 2008. ICSP 2008. 9TH INTERNATIONAL CONFERENCE ON. IEEE, 26. Oktober 2008, 853-856